# FASCICULE DE BREVET EUROPEEN

(11) **EP 4 433 735 B1**
(45) Date de publication et mention de la délivrance du brevet: **31.12.2025**
(21) Numéro de dépôt: 22834685.4
(22) Date de dépôt: 16.11.2022
(51) Int. Cl.: F16L 13/02, F16L 58/18

(54) **ORGANE DE COMPRESSION POUR CONDUITE DE TRANSPORT DE FLUIDES MUNIE D'UN CHEMISAGE INTERNE DE PROTECTION ET METHODE D'UTILISATION**
DRUCKELEMENT FÜR EIN FLÜSSIGKEITSTRANSPORTROHR MIT EINER INNEREN SCHUTZAUSKLEIDUNG UND NUTZUNGSVERFAHREN
COMPRESSION MEMBER FOR A FLUID TRANSPORT PIPE PROVIDED WITH AN INTERNAL PROTECTIVE LINING AND METHOD OF USE

(30) Priorité: 19.11.2021 FR 2112276
(43) Date de publication de la demande: 25.09.2024
(73) Titulaire: SAIPEM S.A., 92800 Puteaux (FR)
(72) Inventeur: HALLOT, Raymond, 92800 Puteaux (FR); BLASSIAU, Sébastien, 92800 Puteaux (FR)
(74) Mandataire: Cabinet Beau de Loménie
(86) Numéro de dépôt international: PCT/FR2022/052100
(87) Numéro de publication internationale: WO 2023/089269

(56) Documents cités:
- WO-A1-96/28683
- FR-A1- 3 085 736
- GB-A- 2 319 315

## Description

### Domaine Technique

La présente invention se rapporte au domaine général des conduites réalisées par assemblage d'éléments de conduites en acier et comportant un chemisage interne en matière plastique protégeant de la corrosion les parois en acier des conduites.

La présente invention concerne plus précisément des conduites véhiculant des fluides corrosifs, notamment des conduites sous-marines véhiculant de l'eau de mer sous pression destinée à être injectée dans des puits de champs pétroliers.

### Technique antérieure

De telles conduites sous-marines sont généralement réalisées par soudage bout à bout des extrémités d'éléments de conduites en acier. Les aciers constituant les conduites et les soudures entre éléments de conduites peuvent être sujet à la corrosion lorsque la conduite véhicule un fluide corrosif, notamment de l'eau ou un fluide comportant de l'eau, et plus particulièrement de l'eau salée.

Une solution connue pour pallier ce problème consiste à protéger la surface interne en acier de la conduite contre la corrosion par application d'un chemisage (appelé aussi « liner ») réalisé à partir d'un revêtement souple en matériau thermoplastique. Cependant, les extrémités des éléments de conduite ne doivent pas être pré-revêtues par ce revêtement de protection. En effet, celui-ci ne supporte pas les températures élevées mises en œuvre lors des opérations de soudage des éléments de conduite entre eux.

Pour assurer la continuité du revêtement de protection en matériau thermoplastique aux extrémités des deux éléments de conduite à souder, il est connu d'insérer un manchon tubulaire de jonction en matériau anti corrosion dans la conduite, le manchon venant chevaucher de manière étanche les extrémités des deux revêtements de protection à l'intérieur de la conduite et au droit de la soudure à réaliser. Ce type de solution permet ainsi d'éviter la réalisation d'un chemisage en acier allié anticorrosion et/ou d'une soudure en acier allié anticorrosion. En revanche, ces manchons tubulaires de jonction présentent l'inconvénient d'être complexes et coûteux à mettre en place.

On connaît également du document WO 2020/053511 (FR3085736) une solution pour assembler les éléments de conduite à souder directement entre eux avec une soudure périphérique en acier anticorrosion. Une bague de compression en acier allié résistant à la corrosion est insérée à l'intérieur de la partie terminale de chaque élément de conduite afin d'assurer la protection et l'isolation de la partie terminale du revêtement de protection lors du soudage des extrémités des éléments de conduite.

Cette solution permet ainsi d'assurer la protection contre la corrosion de la paroi interne de la conduite avec un revêtement de protection en matière thermoplastique sur la partie courante des éléments de conduites et un revêtement en acier anticorrosion aux extrémités à souder des deux éléments de conduite, et ce sans recourir à un manchon tubulaire de jonction et/ou sans intercaler de pièce de raccordement en acier de plus petite dimension que l'élément de conduite à souder entre les deux éléments de conduite d'autre part.

Dans cette solution, la bague de compression comprend une partie terminale de forme tronconique afin de créer une variation progressive du diamètre interne de la conduite au niveau de la transition entre la partie terminale de la couche en alliage anticorrosion non chemisée et la partie terminale du revêtement en matière plastique en sur épaisseur par rapport à la deuxième partie terminale de la couche en alliage anticorrosion non chemisée.

Or, une telle bague de compression présente l'inconvénient d'être difficile à insérer en force à l'intérieur de la conduite puisque sa partie terminale de forme tronconique n'offre pas de surface d'appui suffisante pour un outil de poussée (typiquement un piston hydraulique). Un outil de poussée spécifique à ce type de bague de compression doit donc être utilisé.

### Exposé de l'invention

L'invention a donc pour but de proposer un organe de compression qui puisse être aisément insérée dans la conduite par un outil de poussée classique tout en facilitant le passage de racleurs à l'intérieur de la conduite.

Ce but est atteint grâce à un organe de compression pour conduite de transport de fluides munie d'un chemisage interne de protection, comprenant une bague annulaire qui est destinée à être insérée en force à l'intérieur de la conduite et qui comprend une extrémité aval d'insertion ayant une forme tronconique, une extrémité amont de poussée opposée à l'extrémité d'insertion, et une partie centrale sensiblement cylindrique reliant entre elles les extrémités amont et aval et destinée à venir comprimer une extrémité du chemisage interne de protection contre une paroi interne de la conduite, dans lequel, conformément à l'invention, l'extrémité de poussée comprend :
- une collerette annulaire faisant saillie radialement vers l'extérieur et formant une surface d'appui pour un outil de poussée de la bague à l'intérieur de la conduite ;
- une cavité annulaire formée en amont de la collerette ; et
- un élément annulaire de remplissage de la cavité qui est destiné à être inséré à l'intérieur de la cavité de la bague, l'élément de remplissage étant une pièce indépendante de la bague qui présente une forme tronconique de façon à faciliter le passage de racleurs à l'intérieur de la conduite une fois l'élément de remplissage inséré à l'intérieur de la cavité de la bague.

L'invention est remarquable notamment en ce qu'elle propose un organe de compression muni à la fois d'une surface d'appui droite pour permettre à l'outil de poussée de prendre appui pour insérer en force la bague à l'intérieur de la conduite, et d'une forme tronconique lui permettant de faciliter le passage de racleurs à l'intérieur de la conduite.

De préférence, la cavité de la bague comprend à une extrémité amont un rebord en saillie vers l'intérieur pour assurer un blocage axial de l'élément de remplissage une fois celui-ci inséré à l'intérieur de la cavité.

Selon un premier mode de réalisation, l'élément de remplissage est une couronne de forme tronconique réalisée en matériau polymère qui est apte à se déformer pour venir s'insérer en force dans la cavité de la bague.

Selon un deuxième mode de réalisation, l'élément de remplissage est composé d'un matériau injecté dans un moule de forme tronconique préalablement positionné autour de la cavité.

Selon un troisième mode de réalisation, l'élément de remplissage est un anneau de forme tronconique qui est réalisé en matériau polymère et qui est fendu de façon à permettre une réduction de son diamètre lors de son insertion en force dans la cavité de la bague.

Dans ce mode de réalisation, l'anneau peut comprendre en outre un jonc d'arrêt logé dans une rainure annulaire de façon à assurer une retenue de l'anneau dans la cavité de la bague.

Quel que soit le mode de réalisation, l'extrémité amont de la bague est avantageusement soudée sur la paroi interne de la conduite.

De plus, la forme tronconique de l'extrémité d'insertion de la bague est avantageusement évasée vers l'aval et la forme tronconique de l'élément de remplissage est évasée vers l'amont.

L'invention a également pour objet un procédé de montage de l'organe de compression tel que défini précédemment à l'intérieur d'une conduite de transport de fluides muni d'un chemisage interne de protection, comprenant l'insertion en force de la bague à l'intérieur de la conduite à l'aide d'un outil de poussée prenant appui contre la collerette de l'extrémité de poussée, le soudage d'une extrémité amont de la bague sur une paroi interne de la conduite, et l'insertion de l'élément de remplissage à l'intérieur de la cavité de la bague.

Dans le cas d'une application à un organe de compression selon le premier mode de réalisation, la couronne formant l'élément de remplissage est avantageusement déformée par chauffage préalablement à son insertion à l'intérieur de la cavité de la bague.

Dans le cas d'une application à un organe de compression selon le deuxième mode de réalisation, l'étape d'insertion de l'élément de remplissage comprend avantageusement la mise en place du moule de forme tronconique autour de la cavité de la bague, l'injection d'un matériau dans le moule pour le remplir, le refroidissement du matériau injecté, et le retrait du moule.

Dans ce cas, le matériau injecté dans le moule peut être une résine époxy, une mousse de polyuréthane ou une mousse de polyéthylène.

Dans le cas d'une application à un organe de compression selon le troisième mode de réalisation, l'anneau formant l'élément de remplissage est avantageusement déformé par réduction de son diamètre préalablement à son insertion à l'intérieur de la cavité de la bague.

### Brève description des dessins

[Fig. 1] La figure 1 est une vue en perspective et partielle d'un organe de compression selon un premier mode de réalisation de l'invention.
[Fig. 2A] ; [Fig. 2B] ; [Fig. 2C] Les figures 2A à et 2C sont des vues schématiques de différentes étapes du montage de l'organe de compression de la figure 1.
[Fig. 3A] ; [Fig. 3B] ; [Fig. 3C] Les figures 3A à 3C représentent des étapes du montage d'un organe de compression selon un deuxième mode de réalisation de l'invention.
[Fig. 4] La figure 4 est une vue schématique et en perspective d'un organe de compression selon un troisième mode de réalisation de l'invention.

### Description des modes de réalisation

L'invention concerne un organe de compression destiné à être inséré à l'intérieur d'une conduite de transport de fluides corrosifs qui est munie d'un chemisage interne de protection.

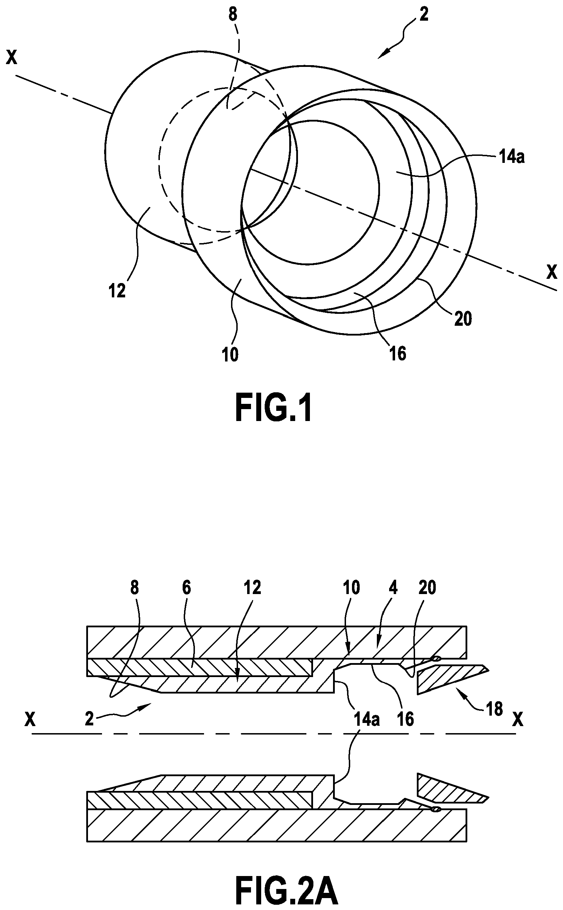

L'organe de compression selon l'invention se compose d'une bague annulaire telle que représentée sur la figure 1, et d'un élément de remplissage venant se loger dans une cavité de la bague.

La figure 1 représente de façon schématique et en perspective une bague annulaire 2 d'un organe de compression selon un premier mode de réalisation de l'invention.

Comme représenté sur les figures 2A à 2C, cette bague 2 est destinée à être insérée en force à l'intérieur d'une conduite 4 de transport de fluides corrosifs munie d'un chemisage interne de protection 6, réalisé par exemple dans un matériau thermoplastique.

La bague 2 présente un axe de révolution X-X qui est centré sur l'axe de la conduite 4 lorsqu'elle est insérée à l'intérieur de celle-ci.

La bague 2 comprend une extrémité aval d'insertion 8 ayant une forme tronconique, une extrémité amont de poussée 10 opposée à l'extrémité d'insertion, et une partie centrale 12 sensiblement cylindrique reliant entre elles les extrémités aval 8 et amont 10.

La partie centrale 12 de la bague est destinée à venir comprimer l'extrémité du chemisage interne de protection 6 contre la paroi interne de la conduite 4.

Conformément à l'invention, l'extrémité de poussée 10 de la bague 2 comprend notamment une collerette annulaire 14 qui fait saillie radialement vers l'extérieur. Cette collerette 14 présente une face plane arrière 14a qui s'étend selon une direction radiale (par rapport à l'axe de révolution X-X de la bague) et qui forme ainsi une surface d'appui pour un outil de poussée de la bague à l'intérieur de la conduite.

L'extrémité de poussée 10 de la bague 2 comprend également une cavité annulaire 16 qui est formée en amont de la collerette 14. Comme représenté sur la figure 2A, cette cavité 16 est en saillie radialement par rapport à la partie centrale 12 de la bague et vient en appui directement contre la paroi interne de la conduite.

L'extrémité de poussée 10 de la bague comprend encore un élément annulaire de remplissage 18 qui est destiné à être inséré à l'intérieur de la cavité 16.

Cet élément de remplissage 18 est une pièce indépendante de la bague 2 (il est notamment inséré dans la conduite après que la bague ait été insérée). Il présente une partie 18a ayant une forme tronconique de façon à faciliter le passage de racleurs à l'intérieur de la conduite une fois qu'il aura été inséré à l'intérieur de la cavité de la bague.

Par ailleurs, afin d'assurer un blocage axial de l'élément de remplissage 18 une fois celui-ci inséré à l'intérieur de la cavité 16 de la bague, celle-ci comprend à une extrémité amont un rebord 20 faisant saillie vers l'intérieur.

Plusieurs modes de réalisation de l'élément de remplissage sont envisageables.

Les figures 2A à 2C montrent un premier de ces modes de réalisation. Dans ce premier mode de réalisation, l'élément de remplissage est une couronne 18 de forme tronconique qui est réalisée en matériau polymère et qui est apte à se déformer pour venir s'insérer en force dans la cavité 16 de la bague.

Comme représenté sur la figure 2A, la bague 2 est d'abord insérée en force à l'intérieur de la conduite 4 par l'intermédiaire d'un outil de poussée (non représenté), typiquement un piston hydraulique, venant prendre appui contre la surface d'appui 14a de la collerette 14 de la bague.

Lorsque la bague 2 est correctement positionnée, la couronne 18 en matériau polymère est à son tour insérée à l'intérieur de la conduite 4 au moyen d'un autre outil (non représenté).

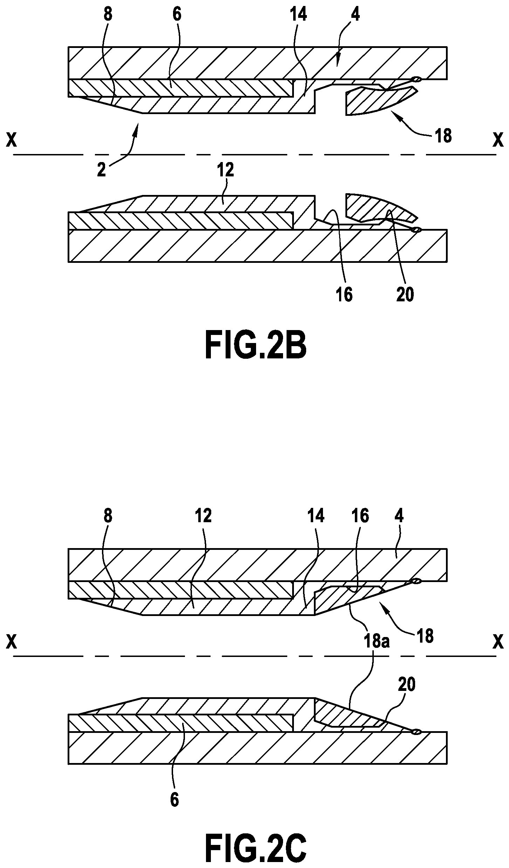

Lorsque la couronne 18 atteint le rebord 20 de la cavité de la bague (figure 2B), elle se déforme localement afin de pouvoir franchir cet obstacle et passer au-delà.

Une fois qu'elle a passé le rebord 20, la couronne reprend sa forme initiale et vient se loger à l'intérieur de la cavité 16 (figure 2C). Compte-tenu de sa partie 18a de forme tronconique, l'organe de compression présente ainsi une forme tronconique à ses deux extrémités longitudinales, permettant ainsi de faciliter le passage de racleurs à l'intérieur de la conduite (dans les deux sens d'avance).

On notera que pour faciliter sa déformation locale et son insertion dans la cavité de la bague, la couronne 18 peut avantageusement être déformée par chauffage préalablement à son insertion à l'intérieur de la cavité de la bague. Une fois la couronne installée dans la cavité et refroidie, elle reprend sa rigidité initiale.

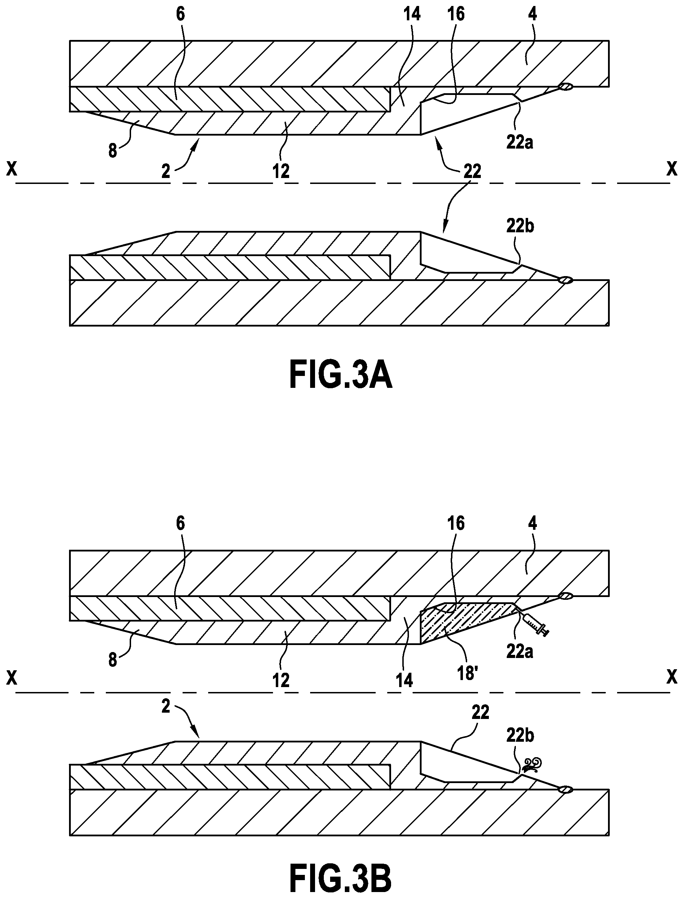

Les figures 3A à 3C représentent un deuxième mode de réalisation possible pour l'élément de remplissage.

Dans ce mode de réalisation, l'élément de remplissage est composé d'un matériau 18' qui est injecté dans un moule 22 de forme tronconique préalablement positionné autour de la cavité 16.

Plus précisément, une fois la bague 2 correctement positionnée à l'intérieur de la conduite 4, un moule 22 ayant une forme tronconique est inséré à l'intérieur de la conduite pour venir se positionner autour de la cavité pour fermer celle-ci (figure 3A).

Le moule 22 comprend au moins un orifice d'injection 22a, et au moins un orifice d'évacuation d'air 22b.

Le volume vide de la cavité 16 ainsi fermée est alors rempli par l'injection (via l'orifice d'injection 22a) de matériaux résine de type époxy, mousse de polyuréthane ou mousse de polyéthylène (figure 3B). Au cours du remplissage, l'air est remplacé peu à peu par les matériaux injectés et s'échappe hors de la cavité par l'orifice d'évacuation d'air 22b.

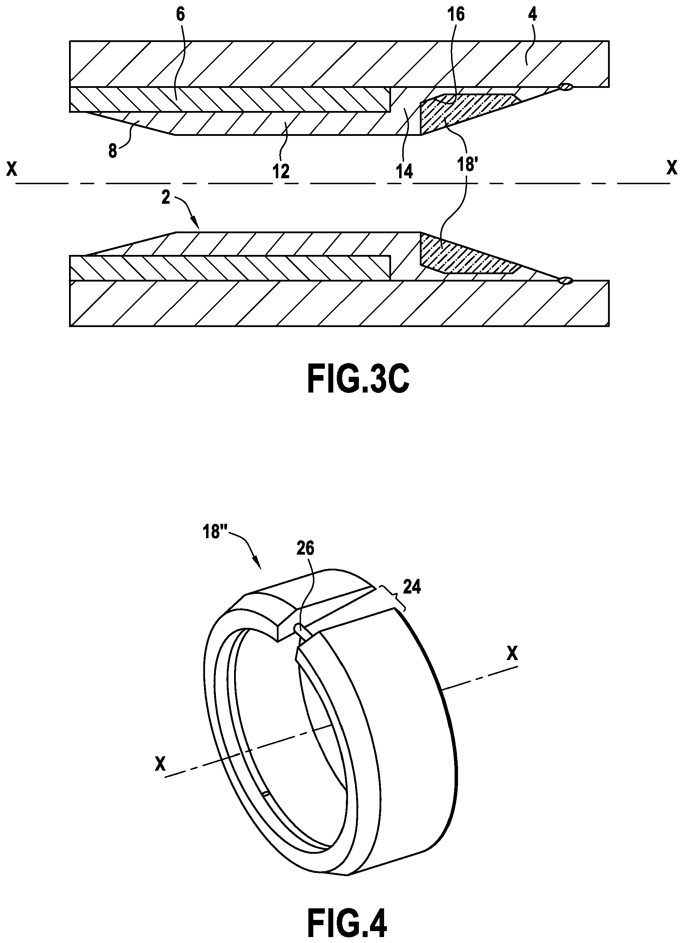

Une fois que le volume de la cavité est entièrement comblé par les matériaux injectés, le moule est retiré hors de la conduite. La cavité 16 est alors remplie d'un élément de remplissage 18' et l'organe de compression présente ainsi une forme tronconique à ses deux extrémités longitudinales (figure 3C).

La figure 4 représente un troisième mode de réalisation possible pour l'élément de remplissage.

Dans ce mode de réalisation, l'élément de remplissage est un anneau 22" de forme tronconique qui est réalisé en matériau polymère et qui est fendu de façon à permettre une réduction de son diamètre lors de son insertion en force dans la cavité de la bague.

Comme représenté sur la figure 4, l'anneau 22" présente une fente 24 qui permet de réduire légèrement son diamètre afin de faciliter son insertion en force à l'intérieur de la cavité de la bague.

Une fois la bague 2 correctement positionnée à l'intérieur de la conduite 4, l'anneau 22" est déformé par réduction de son diamètre pour faciliter son insertion à l'intérieur de la cavité de la bague. Lorsque l'anneau est correctement positionné à l'intérieur de la cavité, la déformation cesse et il reprend son diamètre initial.

De façon avantageuse, l'anneau 22" comprend en outre un jonc d'arrêt 26 (type circlips) qui est logé dans une rainure annulaire de façon à assurer une retenue de l'anneau dans la cavité de la bague.

On notera que quel que soit le mode de réalisation de l'organe de compression, l'extrémité amont 10 de la bague 2 est de préférence soudée sur la paroi interne de la conduite.

On notera également que la forme tronconique de l'extrémité d'insertion 8 de la bague 2 est évasée vers l'aval, tandis que la forme tronconique de l'élément de remplissage 18, 18', 18" est évasée vers l'amont.

## Revendications

1. Organe de compression pour conduite (4) de transport de fluides munie d'un chemisage interne de protection (6), comprenant une bague (2) annulaire qui est destinée à être insérée en force à l'intérieur de la conduite et qui comprend une extrémité aval d'insertion (8) ayant une forme tronconique, une extrémité amont de poussée (10) opposée à l'extrémité d'insertion, et une partie centrale (12) sensiblement cylindrique reliant entre elles les extrémités amont et aval et destinée à venir comprimer une extrémité du chemisage interne de protection contre une paroi interne de la conduite,
**caractérisé en ce que** l'extrémité de poussée (10) comprend :
- une collerette (14) annulaire faisant saillie radialement vers l'extérieur et formant une surface d'appui (14a) pour un outil de poussée de la bague à l'intérieur de la conduite ;
- une cavité (16) annulaire formée en amont de la collerette ; et
- un élément annulaire de remplissage (18 ; 18' ; 18") de la cavité qui est destiné à être inséré à l'intérieur de la cavité de la bague, l'élément de remplissage étant une pièce indépendante de la bague qui présente une forme tronconique de façon à faciliter le passage de racleurs à l'intérieur de la conduite une fois l'élément de remplissage inséré à l'intérieur de la cavité de la bague.

2. Organe selon la revendication 1, dans lequel la cavité (16) de la bague (2) comprend à une extrémité amont un rebord (20) en saillie vers l'intérieur pour assurer un blocage axial de l'élément de remplissage une fois celui-ci inséré à l'intérieur de la cavité.

3. Organe selon l'une des revendications 1 et 2, dans lequel l'élément de remplissage est une couronne (18) de forme tronconique réalisée en matériau polymère qui est apte à se déformer pour venir s'insérer en force dans la cavité (16) de la bague.

4. Organe selon l'une des revendications 1 et 2, dans lequel l'élément de remplissage est composé d'un matériau (18') injecté dans un moule (22) de forme tronconique préalablement positionné autour de la cavité (16) de la bague.

5. Organe selon l'une des revendications 1 et 2, dans lequel l'élément de remplissage est un anneau (18") de forme tronconique qui est réalisé en matériau polymère et qui est fendu de façon à permettre une réduction de son diamètre lors de son insertion en force dans la cavité (16) de la bague.

6. Organe selon la revendication 5, dans lequel l'anneau (18") comprend en outre un jonc d'arrêt (26) logé dans une rainure annulaire de façon à assurer une retenue de l'anneau dans la cavité de la bague.

7. Organe selon l'une quelconque des revendications 1 à 6, dans lequel l'extrémité amont de la bague est soudée sur la paroi interne de la conduite.

8. Organe selon l'une quelconque des revendications 1 à 7, dans lequel la forme tronconique de l'extrémité d'insertion de la bague est évasée vers l'aval et la forme tronconique de l'élément de remplissage est évasée vers l'amont.

9. Procédé de montage de l'organe de compression selon l'une quelconque des revendications 1 à 8 à l'intérieur d'une conduite (4) de transport de fluides muni d'un chemisage interne de protection (6), comprenant l'insertion en force de la bague (2) à l'intérieur de la conduite à l'aide d'un outil de poussée prenant appui contre la collerette (14) de l'extrémité de poussée (10), le soudage d'une extrémité amont de la bague sur une paroi interne de la conduite, et l'insertion de l'élément de remplissage (18 ; 18' ; 18") à l'intérieur de la cavité (16) de la bague.

10. Procédé selon la revendication 9 lorsqu'elle dépend de la revendication 3, dans lequel la couronne (18) formant l'élément de remplissage est déformée par chauffage préalablement à son insertion à l'intérieur de la cavité de la bague.

11. Procédé selon la revendication 9 lorsqu'elle dépend de la revendication 4, dans lequel l'étape d'insertion de l'élément de remplissage comprend la mise en place du moule (22) de forme tronconique autour de la cavité de la bague, l'injection d'un matériau (18') dans le moule pour le remplir, le refroidissement du matériau injecté, et le retrait du moule.

12. Procédé selon la revendication 11, dans lequel le matériau injecté dans le moule est une résine époxy, une mousse de polyuréthane ou une mousse de polyéthylène.

13. Procédé selon la revendication 9 lorsqu'elle dépend de la revendication 5, dans lequel l'anneau (18") formant l'élément de remplissage est déformé par réduction de son diamètre préalablement à son insertion à l'intérieur de la cavité de la bague.

## Patentansprüche

1. Kompressionsorgan für Fluidtransportleitung (4), die mit einer inneren Schutzauskleidung (6) versehen ist, umfassend einen ringförmigen Ring (2), der dazu bestimmt ist, unter Kraftaufwand in das Innere der Leitung eingeführt zu werden, und der ein stromabwärtiges Einsetzende (8), das eine kegelstumpfförmige Form aufweist, ein stromaufwärtiges Schiebeende (10) gegenüber dem Einsetzende und einen im Wesentlichen zylindrischen mittleren Abschnitt (12), der das staromaufwärtige und das stromabwärtige Ende miteinander verbindet und dazu bestimmt ist, ein Ende der inneren Schutzauskleidung gegen eine Innenwand der Leitung zu pressen, umfasst,
**dadurch gekennzeichnet, dass** das Schiebeende (10) umfasst:
- einen ringförmigen Bund (14), der radial nach außen hervorsteht und eine Auflagefläche (14a) für ein Druckwerkzeug des Rings in das Innere der Leitung bildet;
- einen ringförmigen Hohlraum (16), der stromaufwärts von dem Bund gebildet ist; und
- ein ringförmiges Füllelement (18; 18'; 18") des Hohlraums, das dazu bestimmt ist, in das Innere des Hohlraums des Rings eingesetzt zu werden, wobei das Füllelement ein von dem Ring unabhängiges Teil ist, das eine kegelstumpfförmige Form aufweist, um den Durchgang von Schabern in das Innere der Leitung zu erleichtern, sobald das Füllelement in das Innere des Hohlraums des Rings eingesetzt ist.

2. Organ nach Anspruch 1, wobei der Hohlraum (16) des Rings (2) an einem stromaufwärtigen Ende einen nach innen hervorstehenden Flansch (20) aufweist, um eine axiale Arretierung des Füllelements zu gewährleisten, sobald es in das Innere des Hohlraums eingeführt ist.

3. Organ nach einem der Ansprüche 1 und 2, wobei das Füllelement ein kegelstumpfförmiger Kranz (18) ist, der aus einem polymeren Material gefertigt ist, das sich verformen kann, um mit Kraftaufwand in das Innere des Hohlraums (16) des Rings eingesetzt zu werden.

4. Organ nach einem der Ansprüche 1 und 2, wobei das Füllelement aus einem Material (18') besteht, das in eine kegelstumpfförmige Form (22) eingespritzt wird, die zuvor um den Hohlraum (16) des Rings herum positioniert wurde.

5. Organ nach einem der Ansprüche 1 und 2, wobei das Füllelement ein kegelstumpfförmiger Ring (18") ist, der aus einem polymeren Material gefertigt und geschlitzt ist, um eine Verringerung seines Durchmessers zu ermöglichen, wenn er mit Kraftaufwand in das Innere des Hohlraums (16) des Rings eingesetzt wird.

6. Organ nach Anspruch 5, wobei der Ring (18") zusätzlich einen Sprengring (26) umfasst, der in einer Ringnut aufgenommen ist, um ein Zurückhalten des Rings in dem Hohlraum des Rings zu gewährleisten.

7. Organ nach einem der Ansprüche 1 bis 6, wobei das stromaufwärtige Ende des Rings an die Innenwand der Leitung geschweißt ist.

8. Organ nach einem der Ansprüche 1 bis 7, wobei die kegelstumpfförmige Form des Einsteckendes des Rings stromabwärts aufgeweitet ist und die kegelstumpfförmige Form des Füllelements stromaufwärts aufgeweitet ist.

9. Verfahren zur Montage des Kompressionsorgans nach einem der Ansprüche 1 bis 8 im Inneren einer mit einer inneren Schutzauskleidung (6) versehenen Fluidtransportleitung (4), umfassend das Einsetzen des Rings (2) mit Kraftaufwand in das Innere der Leitung mittels eines Druckwerkzeugs, das an dem Bund (14) des Druckendes (10) anliegt, ein Anschweißen eines stromaufwärtigen Endes des Rings an eine Innenwand der Leitung und ein Einsetzen des Füllelements (18; 18'; 18") in das Innere des Hohlraums (16) des Rings.

10. Verfahren nach Anspruch 9, wenn abhängig von Anspruch 3, wobei der Kranz (18), der das Füllelement bildet, vor dem Einsetzen in das Innere des Hohlraums des Rings durch Erhitzen verformt wird.

11. Verfahren nach Anspruch 9, wenn abhängig von Anspruch 4, wobei der Schritt eines Einsetzens des Füllelements das Anordnen der kegelstumpfförmigen Form (22) um den Hohlraum des Rings, ein Einspritzen eines Materials (18') in die Form, um diese zu füllen, ein Abkühlen des eingespritzten Materials und ein Entfernen der Form umfasst.

12. Verfahren nach Anspruch 11, wobei das in die Form eingespritzte Material ein Epoxidharz, ein Polyurethanschaum oder ein Polyethylenschaum ist.

13. Verfahren nach Anspruch 9, wenn abhängig von Anspruch 5, wobei der Ring (18"), der das Füllelement bildet, vor dem Einsetzen in das Innere des Hohlraum des Rings durch Reduzieren seines Durchmessers verformt wird.

## Claims

1. A compression member for a fluid transport pipeline (4) provided with an inner protective liner (6), comprising an annular ring (2) intended to be forcibly inserted inside the pipeline and which comprises a downstream insertion end (8) with a frustoconical shape, an upstream pushing end (10) opposite to the insertion end, and a substantially cylindrical central portion (12) connecting the upstream and downstream ends together and intended to compress one end of the inner protective liner against an inner wall of the pipeline,
**characterized in that** the pushing end (10) comprises:
- an annular flange (14) protruding radially outwards and forming a bearing surface (14a) for a tool pushing the ring inside the pipeline;
- an annular cavity (16) formed upstream of the flange; and
- an annular element (18; 18'; 18") for filling the cavity, intended to be inserted inside the cavity of the ring, the filling element being an independent part of the ring which has a frustoconical shape so as to facilitate the passage of scrapers inside the pipeline once the filling element is inserted inside the cavity of the ring.

2. The member according to claim 1, wherein the cavity (16) of the ring (2) comprises, at an upstream end, a rim (20) protruding inwards to ensure axial blocking of the filling element once it is inserted inside the cavity.

3. The member according to any of claims 1 and 2, wherein the filling element is a frustoconical crown (18) made of polymer material which is able to deform in order to be forcibly inserted into the cavity (16) of the ring.

4. The member according to any of claims 1 and 2, wherein the filling element is composed of a material (18') injected into a frustoconical mold (22) previously positioned around the cavity (16) of the ring.

5. The member according to any of claims 1 and 2, wherein the filling element is a frustoconical annulus (18") made of polymer material and split so as to allow a reduction in its diameter during its forcible insertion into the cavity (16) of the ring.

6. The member according to claim 5, wherein the annulus (18") further comprises a snap ring (26) housed in an annular groove so as to ensure retention of the annulus in the cavity of the ring (2).

7. The member according to any one of claims 1 to 6, wherein the upstream end of the ring is welded to the inner wall of the pipeline.

8. The member according to any one of claims 1 to 7, wherein the frustoconical shape of the insertion end of the ring is flared downstream and the frustoconical shape of the filling element is flared upstream.

9. A method for mounting the compression member according to any one of claims 1 to 8 inside a fluid transport pipeline (4) provided with an inner protective liner (6), comprising the forcible insertion of the ring (2) inside the pipeline using a pushing tool bearing against the flange (14) of the pushing end (10), the welding of an upstream end of the ring on an inner wall of the pipeline, and the insertion of the filling element (18; 18'; 18") inside the cavity (16) of the ring.

10. The method according to claim 9 when dependent on claim 3, wherein the crown (18) forming the filling element is deformed by heating prior to its insertion inside the cavity of the ring.

11. The method according to claim 9 when dependent on claim 4, wherein the step of inserting the filling element comprises the placement of the frustoconical mold (22) around the cavity of the ring, the injection of a material (18') into the mold to fill it, the cooling of the injected material, and the removal of the mold.

12. The method according to claim 11, wherein the material injected into the mold is an epoxy resin, a polyurethane foam or a polyethylene foam.

13. The method according to claim 9 when dependent on claim 5, wherein the annulus (18") forming the filling element is deformed by reduction of its diameter prior to its insertion inside the cavity of the ring.
